# EUROPEAN PATENT APPLICATION

(11) **EP 2 106 056 A1**
(43) Date of publication of application: **30.09.2009**
(21) Application number: 08153305.1
(22) Date of filing: 26.03.2008
(51) Int. Cl.: H04L 1/18, H04L 1/08

(54) **Methods, apparatuses, system, and related computer program product for information transmission**

(71) Applicant: Nokia Siemens Networks Oy, 02610 Espoo (FI)
(72) Inventor: Hooli, Kari, 90540, Oulu (FI); Tiirola, Esa, 90450, Kempele (FI); KinnunenPasi, 90240, Oulu (FI); Pajukoski, Kari, 90240, Oulu (FI)
(74) Representative: TBK-Patent

(57) **Abstract**

It is disclosed a method comprising generating information to be transmitted, first transmitting, in a first transmission opportunity of n consecutive transmission opportunities, n being an integer greater than 1, the generated information once, and second transmitting, in one transmission opportunity different from the first transmission opportunity, the generated information a number of times different from once; and a method comprising first receiving, in the first transmission opportunity of the n consecutive transmission opportunities the information once, and second receiving, in the one transmission opportunity different from the first transmission opportunity, the information the number of times different from once.

## Description

### FIELD OF THE INVENTION

The present invention relates to information transmission e.g. in an UL (Uplink) transmission. More specifically, the present invention relates to methods, apparatuses, a system and a related computer program product for information transmission e.g. in the UL part of the UTRAN (UMTS (UMTS Terrestrial Radio Access Network) Terrestrial Radio Access Network) LTE (long term evolution) often referred as 3.9G. Examples of the present invention may relate to message 3 transmission and configuration in RA (random access) procedure, but also to other types of data transmission using e.g. HARQ (hybrid automatic repeat request) (i.e. not limited to RA message 3).

### BACKGROUND

In 3GPP LTE (3^{rd} Generation Partnership Project Long Term Evolution), there have been discussions related to information transmission.

That is, the balancing of coverage between different LTE physical channels has recently drawn attention in 3GPP, and TTI (transmission time interval) bundling has been proposed as a solution for improving the coverage balance. In TTI bundling, the same data is essentially transmitted in multiple consecutive TTIs before any (HARQ) feedback such as ACK/NACK (acknowledgement/non-acknowledgement) is obtained from the decoding.

E.g. in the LTE RA procedure, message 3 refers to the first scheduled UL transmission on a PUSCH (physical uplink shared channel) during the random access. HARQ processing may be applied for message 3.

There have been approaches for overcoming the above limitations. However, the delay for the state transition from dormant to active state is limited to e.g. less than 50 ms in LTE and, thus, the number of message 3 retransmission opportunities is limited e.g. to 3, as discussed in 3GPP. The message 3 size may be around 80 bits. On the beginning of the random access procedure, a UE (user equipment) may send a random access burst containing cyclic prefix and preamble sequence on random access channel (RACH). To improve the RACH coverage, the burst can have the 800 ms preamble sequence repeated twice (see RACH preamble format 2 and 3).

One such approach is directed to use normal TTI bundling also for the RA message 3. However, due to lack of knowledge on channel and path loss in particular, TTI bundling would need to be applied for all RA message 3 transmissions in the cell where the bundling for RA message 3 is configured. This would lead to unnecessary RA message 3 overhead.

In consideration of the above, it is an object of the present invention to overcome one or more of the above drawbacks. In particular, the present invention provides methods, apparatuses, a system and a related computer program product for information transmission.

According to the present invention, in a first aspect, this object is for example achieved by **a method** comprising:
generating information to be transmitted;
first transmitting, in a first transmission opportunity of n consecutive transmission opportunities, n being an integer greater than 1, the generated information once; and
second transmitting, in one transmission opportunity different from the first transmission opportunity, the generated information a number of times different from once.

According to further refinements of the invention as defined under the above first aspect,
- in the second transmitting, the information is respectively transmitted once in a second to an (n-1)^{st} transmission opportunity of the n consecutive transmission opportunities, and is transmitted more than once in an n-th transmission opportunity of the n consecutive transmission opportunities;
- the second transmitting is performed by using transmission time interval bundling;
- the second transmitting is performed by hybrid automatic repeat request retransmission opportunities.

According to the present invention, in a second aspect, this object is for example achieved by **a method** comprising:
first receiving, in a first transmission opportunity of n consecutive transmission opportunities, n being an integer greater than 1, information once; and
second receiving, in one transmission opportunity different from the first transmission opportunity, the information a number of times different from once.

According to further refinements of the invention as defined under the above second aspect,
- the method further comprises creating, prior to the first receiving, indication information indicating an option for reception of the information the number of times different from once, and signaling the created indication information;
- the indication information is one of a part of system information and a system information parameter;
- the system information parameter is a random access channel format;
- in the signaling after the first receiving, the indication information is comprised in a retransmission scheduling grant;
- in the second receiving, the information is respectively received once in a second to an (n-1)^{st} transmission opportunity of the n consecutive transmission opportunities, and is received more than once in an n-th transmission opportunity of the n consecutive transmission opportunities;
- the second receiving is performed by using transmission time interval bundling;
- the second receiving is performed by hybrid automatic repeat request retransmission opportunities.

According to further refinements of the invention as defined under the above first and second aspects,
- the information is a random access message 3.

According to the present invention, in a third aspect, this object is for example achieved by **an apparatus** comprising:
means for transmitting, in a first transmission opportunity of n consecutive transmission opportunities, n being an integer greater than 1, information to be transmitted once, and for transmitting, in one transmission opportunity different from the first transmission opportunity, the information a number of times different from once.

According to further refinements of the invention as defined under the above third aspect,
- the apparatus further comprises means for generating the information to be transmitted;
- the means for transmitting is configured to respectively transmit the information once in a second to an (n-1)^{st} transmission opportunity of the n consecutive transmission opportunities, and to transmit the information more than once in an n-th transmission of the n consecutive transmission opportunities;
- the means for transmitting is configured to transmit using transmission time interval bundling;
- the means for transmitting is configured to transmit by hybrid automatic repeat request retransmission opportunities;
- the apparatus is constituted by one of a user equipment and a terminal.

According to the present invention, in a fourth aspect, this object is for example achieved by **an apparatus** comprising:
means for receiving, in a first transmission opportunity of n consecutive transmission opportunities, n being an integer greater than 1, information once, and for receiving, in one transmission opportunity different from the first transmission opportunity, the information a number of times different from once.

According to further refinements of the invention as defined under the above fourth aspect,
- the apparatus further comprises means for creating, prior to the first transmission opportunity, indication information indicating an option for reception of the information the number of times different from once, and means for signaling the created indication information;
- the indication information is one of a part of system information and a system information parameter;
- the system information parameter is a random access channel format;
- the means for signaling is configured to signal, after to the first transmission opportunity, the indication information comprised in a retransmission scheduling grant;
- the means for receiving is configured to respectively receive the information once in a second to an (n-1)^{st} transmission opportunity of the n consecutive transmission opportunities, and to receive the information more than once in an n-th transmission opportunity of the n consecutive transmission opportunities;
- the means for receiving is configured to receive using transmission time interval bundling;
- the means for receiving is configured to receive by hybrid automatic repeat request retransmission opportunities;
- the apparatus is constituted by an evolved node B.

According to further refinements of the invention as defined under the above third and fourth aspects,
- the information is a random access message 3;
- at least one, or more of means for generating, means for transmitting, means for receiving, means for creating, means for signaling and the apparatus is implemented as a chipset or module.

According to the present invention, in a fifth aspect, this object is for example achieved by **a system** comprising:
an apparatus according to the third aspect; and
an apparatus according to the fourth aspect.

According to the present invention, in a sixth aspect, this object is for example achieved by **a computer program product** comprising code means for performing methods steps of a method according to any one of the first and second aspects, when run on a computer.

In this connection, it has to be pointed out that the present invention enables one or more of the following:
- Providing coverage improvement
- Causing significantly smaller overhead in bundling
- Linking the use of bundling e.g. to the RACH format
- no additional downlink signaling needed
- Bundling can be done so that maximum delay is not increased.
- Closing the coverage gap between RACH (preamble) and RA message 3 in particular in the case of repeated RACH preamble sequence, since when comparing the coverage of PUCCH, RACH, and RA message 3 to link simulations, it can be noted that RA message 3 may have the smallest coverage.
- Satisfying the 50 ms delay requirement for the state transition from dormant to active state of the UE, since the number of re-transmission opportunities cannot be increased.

### BRIEF DESCRIPTION OF THE DRAWINGS

An embodiment of the present invention is described herein below with reference to the accompanying drawings, in which:

Fig. 1A shows bundling arrangement examples (Bundle A, B, and C) as well as with the case of without bundling (Basic) and normal bundling (2xBundle), and Fig. 1B shows a comparison of maximum number of TTIs, SNR (signal to noise ratio) requirement and coverage area;

Fig. 2 shows the average number of TTIs used e.g. for RA message 3 transmission;

Fig. 3 shows a delay cdf (cumulative distribution function) e.g. from the beginning of RA message 3 to beginning of ACK transmission;

Fig. 4 shows methods for information transmission according an example of to the present invention; and

Fig. 5 shows respective apparatuses (e.g. UE and eNB) for information transmission according to examples of the present invention.

### DETAILED DESCRIPTION OF THE PRESENT INVENTION

Embodiments of the present invention are described herein below by way of example with reference to the accompanying drawings.

It is to be noted that for this description, the terms "RA message 3, TTI bundling and HARQ retransmission opportunities" are examples for "information, transmitting information more than once in one transmission and second transmitting", respectively, without restricting the latter-named terms to the special technical or implementation details imposed to the first- named terms. It is also noted that first transmission and retransmissions may represent different incremental redundancy versions of the same encoded packet. Furthermore, retransmissions may or may not be self-decodable. It is further noted that there are multiple encoding and combining options that may be used in TTI bundling. The bundled transmissions may represent different incremental redundancy versions of the same encoded packet. Furthermore, transmissions may or may not be self-decodable. The bundled transmissions may be transmitted also at different frequencies.

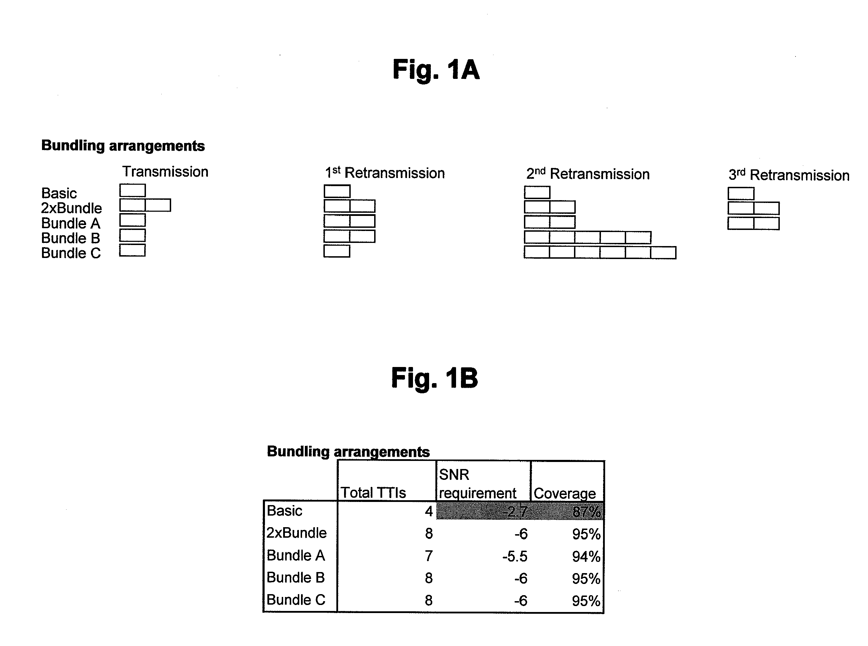

Fig. 1A shows bundling arrangement examples (Bundle A, B, and C) as well as with the case of without bundling (Basic) and normal bundling (2xBundle), and Fig. 1B shows a comparison of maximum number of TTIs, SNR requirement and coverage area.

As shown in Figs. 1A and 1B, there are provided several bundling arrangements (bundles A to C) as examples according to the present invention. In Fig. 1A, an example of the first transmitting (to be described later) is denoted with "transmission", while an example for the second transmitting (to be describe later) is denoted with "1^{st} retransmission" to "3^{rd} retransmission". It is to be noted that the terms "transmission" and "retransmission" may also relate to (re)transmission opportunities. As reference examples, there are given a case of no bundling (denoted with "basic") and basic bundling (denoted with "2xBundle"). In the basic reference case, the information is transmitted once in the transmission and each retransmission, while in the basic bundling case ("2xBundle"), the information is transmitted twice in the transmission and each retransmission.

According to the bundle cases A to C as examples of the present invention, the information is transmitted once in the transmission (also referred to as "1^{st} transmission" hereinafter). In example bundle case A, the information is then transmitted twice in each retransmission (also referred to as "transmissions different from the 1^{st} transmission" hereinafter). In example bundle case B, the information is transmitted twice in the 1^{st} retransmission, 5 times in the 2^{nd} retransmission and is not transmitted in the 3^{rd} retransmission. In example case C, the information is transmitted once in the 1^{st} retransmission, 6 times in the 2^{nd} retransmission and is not transmitted in the 3^{rd} retransmission.

Corresponding coverage estimates for the reference cases and the example cases of the present invention are shown for 1% BLER (block error rate) in Fig. 1B. The RACH coverage with preamble repetition is e.g. 94%. According to the basic reference case, sufficient coverage (only 87%) may not be achieved e.g. for RA message 3 with 3 retransmissions without bundling. Also example bundle cases B and C may provide a favorable coverage of 95%, which is the same as the coverage which may be achieved by the bundle reference case (however, the bundle reference case does so on the expense of a significantly increased average number of TTIs used for transmission, see below).

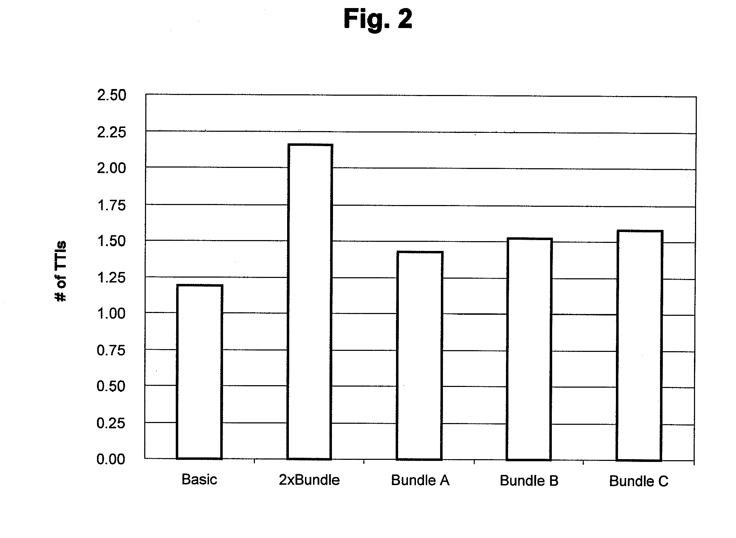

Fig. 2 shows the average number of TTIs used for RA message 3 transmission.

In Fig. 2, the average number of TTIs used for RA message 3 transmission is shown for the considered SINR (signal to interference plus noise ratio) distribution, showing that the proposed bundling has only a modest impact on the average overhead. That is, example bundle cases A to C may exhibit an average number of TTIs around 1.5, while the basic reference case shows an average TTI number of around 1.2, and the bundle reference case shows an average TTI number of around 2.2.

One issue with bundling is the impact on the delay. In practice, bundling may cause even double HARQ RTT (round trip time).

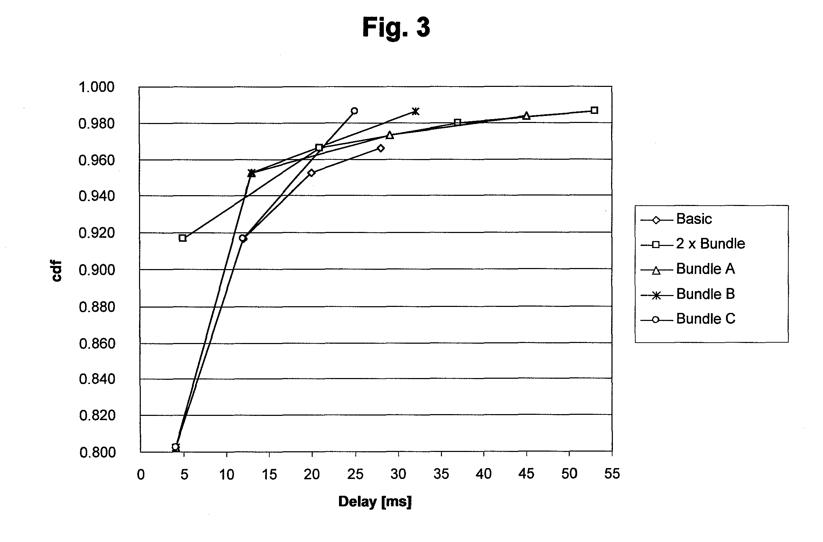

Fig. 3 shows a delay cdf (cumulative distribution function) from e.g. the beginning of RA message 3 transmission to beginning of ACK transmission.

In Fig. 3, the cdf for the delay e.g. from the beginning of RA message 3 transmission to the beginning of positive ACK transmission is shown for the considered SINR cdf of the reference cases (basic, 2xBundle) and the example cased (Bundles A to C).

The delay is calculated with assumptions not favorable for bundling:

| | |
|---|---|
| normal HARQ RTT: | 8 ms, |
| HARQ RTT for bundled transmission: | 16 ms, and |
| eNB processing time: | 3 ms. |

From Fig. 3, it can be seen that the proposed bundling does not increase the maximum delay (see basic reference case around 53 ms), but may even decrease the maximum delay in the example case of bundle C to around 25 ms. Example case bundles A and B may still provide sufficiently low maximum delays of around 45 ms and 32 ms, respectively.

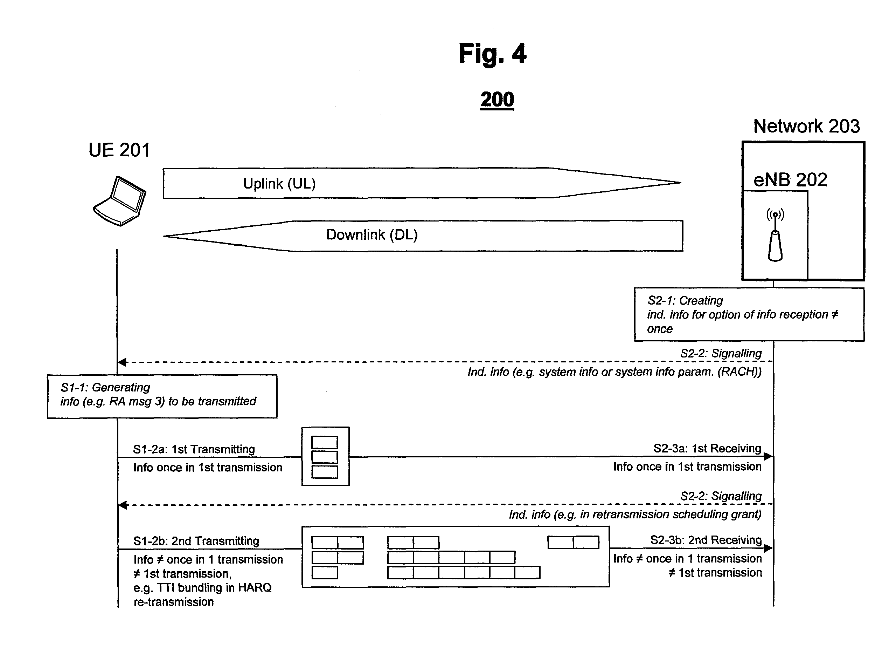

Fig. 4 shows methods according to examples of the present invention. Signaling between elements is indicated in horizontal direction, while time aspects between signaling may be reflected in the vertical arrangement of the signaling sequence as well as in the sequence numbers. It is to be noted that the time aspects indicated in Fig. 4 do not necessarily restrict any one of the method steps shown to the step sequence outlined. This applies in particular to method steps that are functionally disjunctive with each other, for example step S1-1 of generating information to be transmitted may also be performed e.g. prior to step S2-2 of signaling indication information. Within Fig. 4, for ease of description, means or portions which may provide main functionalities are depicted with solid functional blocks or arrows and a normal font, while means or portions which may provide optional functions are depicted with dashed functional blocks or arrows and an italic font.

As shown in Fig. 4, a communication system 200 may comprise a UE 201 and a network 203. The network 203 in turn may comprise a base station such as the eNB 202. The eNB 202 may also be disposed as an integral entity with e.g. a gateway entity not shown, or may be connected to the gateway entity not shown.

As optional preparatory measures, in step S2-1, e.g. the eNB 202 may perform creating, prior to a first receiving, indication information indicating an option for reception of the information the number of times different from once. Furthermore, in step S2-2, e.g. the eNB 202 may perform signaling, to the UE 201, the created indication information. The indication information may be a part of system information or a system information parameter, such as a random access channel format. Alternatively, the indication information may be comprised, after the first receiving, in a retransmission scheduling grant. Finally, in step S1-1, e.g. the UE 201 may perform generating the information to be transmitted (e.g. an random access message 3).

In step S1-2a, e.g. the UE 201 may perform first transmitting, in a first transmission opportunity of n consecutive transmission opportunities, n being an integer greater than 1, the generated information once (see e.g. box on arrow for step S1-2a). In step S2-3a, e.g. the eNB 202 may perform receiving, in the first transmission opportunity, the generated information once.

In step S1-2b, e.g. the UE 201 may perform second transmitting, in one transmission opportunity different from the first transmission opportunity, the generated information a number of times different from once (see e.g. box on arrow for step S1-2b). Thus, in step S2-3b, e.g. the eNB 202 may perform receiving, in the one transmission opportunity different from the first transmission opportunity, the generated information the number of times different from once.

According to further refinements of the methods relating e.g. to the eNB 202 or UE 201 according to examples of the present invention, the information to be transmitted may be a RA message 3. In addition, the information may respectively be transmitted/received once in a second to an (n-1)^{st} transmission opportunity of the n consecutive transmission opportunities, and may be transmitted/received more than once in an n-th transmission opportunity of the n consecutive transmission opportunities. Furthermore, the second transmitting may be performed by using transmission time interval bundling or by hybrid automatic repeat request retransmission opportunities.

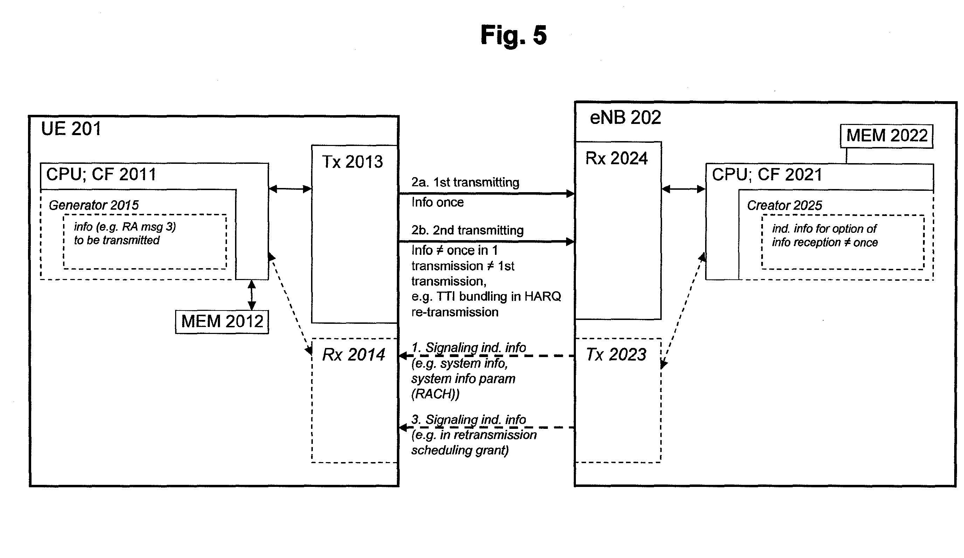

Fig. 5 shows embodiments of respective apparatuses (e.g. UE 201 and BS/RNC 202) for information transmission according to examples of the present invention. Within Fig. 5, for ease of description, means or portions which may provide main functionalities are depicted with solid functional blocks or arrows and a normal font, while means or portions which may provide optional functions are depicted with dashed functional blocks or arrows and an italic font.

The UE 201 may comprise a CPU or core functionality CF (referred to as "CPU" hereinafter) 2011, a memory 2012, a transmitter (or means for transmitting) Tx 2013, an optional receiver (or means for receiving) Rx 2014 and an optional generator (or means for generating) 2015. The eNB 202 may comprise a CPU 2021, a memory 2022, an optional transmitter (or means for transmitting) Tx 2023, a receiver (or means for receiving) Rx 2024 and an optional creator (or means for creating) 2025. As indicated by the dashed extensions of the functional blocks of the CPUs 2011 and 2021, the means for generating 2015 of the UE 201 and/or the means for creating 2025 of the eNB 202 may be functionalities running on the CPUs 2011 and/or 2021 or may alternatively be separate functional entities or means.

The CPUs 20x1 (wherein x = 1 and 2) may respectively be configured to process various data inputs and to control the functions of the memories 20x2, the (optional) transmitters 202x3 and the (optional) receivers 20x4 (and the means for generating 2015 of the UE 201 as well as the means for creating 2025 of the eNB 202). The memories 20x2 may respectively serve e.g. for storing code means for carrying out e.g. the respective method according to examples of the invention, when run on the CPUs 20x1. It is to be noted that the (optional) transmitters 20x3 and the (optional) receivers 20x4 may alternatively be provided as respective integral transceivers (not shown). It is further to be noted that the transmitters/receivers may be implemented i) as physical transmitters/receivers for transceiving e.g. via the air interface (e.g. in case of UE 201 towards the eNB 202), or ii) as routing entities e.g. for transmitting/receiving data packets e.g. in a PS (packet switched) network (e.g. between the eNB 202 and a gateway not shown when the eNB 202 and the gateway are disposed as separate network entities), or iii) as functionalities for writing/reading information into/from a given memory area (e.g. in case of shared/common CPUs or memories e.g. of eNB 202 and the gateway not shown when the eNB 202 and the gateway not shown are disposed as an integral network entity), or iv) as any suitable combination of i) to iii).

Optionally, e.g. the eNB 202 may comprise the creator (or means for creating) 2025 for creating, prior to a first transmission opportunity, indication information indicating an option for reception of the information the number of times different from once. Furthermore, e.g. the optional transmitter 2023 in conjunction with the CPU 2021 of the eNB 202 may constitute the means for signaling, to the optional receiver 2012 of the UE 201, the created indication information. The indication information may be a part of system information or a system information parameter, such as a random access channel format. Alternatively, the indication information may be comprised, after the first receiving, in a retransmission scheduling grant. Finally, e.g. the UE 201 may comprise the optional generator (or means for generating) 2015 for generating the information to be transmitted (e.g. an random access message 3).

For example, the transmitter 2013 of the UE 201 may perform transmitting, in a first transmission opportunity of n consecutive transmission opportunities, n being an integer greater than 1, the generated information once. And, e.g. the receiver 2024 of the eNB 202 may perform receiving, in the first transmission opportunity, the generated information once.

Furthermore, e.g. the transmitter 2013 of the UE 201 may perform transmitting, in one transmission opportunity different from the first transmission opportunity, the generated information a number of times different from once (see e.g. above in conjunction with Fig. 1). Thus, e.g. the receiver 2024 of the eNB 202 may perform receiving, in the one transmission opportunity different from the first transmission opportunity, the generated information the number of times different from once.

According to further refinements e.g. of the eNB 202 or UE 201 according to examples of the present invention, the information to be transmitted by the transmitter 2013 of the UE 201 may be a RA message 3. In addition, the transmitter 2013 of the UE 201/the receiver 2024 of the eNB 202 may respectively be configured to transmit/receive the information once in a second to an (n-1)^{st} transmission opportunity of the n consecutive transmission opportunities, and to transmit/receive the information more than once in an n-th transmission opportunity of the n consecutive transmission opportunities. Furthermore, the transmitter 2013 of the UE 201 may be configured to transmit using transmission time interval bundling or hybrid automatic repeat request retransmission opportunities.

Furthermore, at least one of, or more of the means for generating 2015 of the UE 201, the means for transmitting 2013 of the UE 201, the means for receiving 2024 of the eNB 202, the means for creating 2025 of the eNB 202, the means for signaling 2021; 2023 and the UE 201 and/or the eNB 202, or the respective functionalities carried out, may be implemented as a chipset or module.

Finally, the present invention also relates to a system which may comprise the UE 201 and the eNB 202.

Without being restricted to the details following in this section, the embodiment of the present invention may be summarized as follows:
There is provided an efficient TTI bundling method for situations when base station does not have sufficient information on the path loss to reliably estimate the need for bundling before the beginning of data transmission in question. The method may be applied to LTE RA message 3 transmission in particular.
   TTI bundling may be done only for HARQ re-transmissions. That is, no bundling may used for the first transmission.
   TTI bundling may be different also for different retransmissions. A particular example is the case when bundling is done only for the last re-transmission.
   The use of bundling may be signaled to the terminal as part of system information, or it may be linked to another system information parameter, such as RACH format.
   The use of bundling for re-transmission may be indicated also on the re-transmission scheduling grant. In such case, the need for bundling is estimated based on the information obtained in the detection and decoding of the first transmission. Alternatively, bundling can be autonomously coupled with the pre-determined retransmissions of non-adaptive HARQ (having no scheduling grants for retransmissions).

[Further embodiments]

For the purpose of the present invention as described herein above, it should be noted that
- an access technology may be any technology by means of which a user equipment can access an access network (or base station, respectively). Any present or future technology, such as WiMAX (Worldwide Interoperability for Microwave Access) or WLAN (Wireless Local Access Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- a network may be any device, unit or means by which a station entity or other user equipment may connect to and/or utilize services offered by the access network; such services include, among others, data and/or (audio-) visual communication, data download etc.;
- generally, the present invention may be applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a user equipment may be any device, unit or means by which a system user may experience services from an access network;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at the UE and/or the eNB, or any module (s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
- devices, units or means (e.g. UE and/or eNB and their respective means) can be implemented as individual devices, units or means, but this does not exclude that they are implemented in a distributed fashion throughout the system, as long as the functionality of the device, unit or means is preserved.

For ease of clearness, the following table provides a survey of the abbreviations used in the above description. It is to be noted that an "s" following an abbreviation represents the plural of that abbreviation, e.g. "UEs" represents "user equipments".
- 3GPP: 3^{rd} generation partnership project
- DL: Downlink
- UL: Uplink
- eNB: Evolved node B
- UTRAN: UMTS Terrestrial Radio Access Network
- UMTS: UMTS Terrestrial Radio Access Network
- HARQ: Hybrid Automatic Repeat Request
- LTE: Long Term Evolution
- PUCCH: Physical Uplink Control Channel
- PUSCH: Physical Uplink Shared Channel
- RA: Random Access
- RACH: Random Access Channel
- TTI: Transmission Time Interval

- UE: User Equipment
- ACK/NACK: Acknowledgement/non-acknowledgement
- Cdf: Cumulative distribution function

## Claims

1. A method, comprising:
generating information to be transmitted;
first transmitting, in a first transmission opportunity of n consecutive transmission opportunities, n being an integer greater than 1, the generated information once; and
second transmitting, in one transmission opportunity different from the first transmission opportunity, the generated information a number of times different from once.

2. The method according to claim 1, wherein, in the second transmitting, the information is respectively transmitted once in a second to an (n-1)^{st} transmission opportunity of the n consecutive transmission opportunities, and is transmitted more than once in an n-th transmission opportunity of the n consecutive transmission opportunities.

3. The method according to claims 1 or 2, wherein the second transmitting is performed by using transmission time interval bundling.

4. The method according to any one of claims 1 to 3, wherein the second transmitting is performed by hybrid automatic repeat request retransmission opportunities.

5. A method, comprising:
first receiving, in a first transmission opportunity of n consecutive transmission opportunities, n being an integer greater than 1, information once; and
second receiving, in one transmission opportunity different from the first transmission opportunity, the information a number of times different from once.

6. The method according to claim 5, further comprising:
creating, prior to the first receiving, indication information indicating an option for reception of the information the number of times different from once; and
signaling the created indication information.

7. The method according to claim 6, wherein the indication information is one of a part of system information and a system information parameter.

8. The method according to claim 7, wherein the system information parameter is a random access channel format.

9. The method according to any one of claims 6 to 8, wherein, in the signaling after the first receiving, the indication information is comprised in a retransmission scheduling grant.

10. The method according to any one of claims 5 to 9, wherein, in the second receiving, the information is respectively received once in a second to an (n-1)^{st} transmission opportunity of the n consecutive transmission opportunities, and is received more than once in an n-th transmission opportunity of the n consecutive transmission opportunities.

11. The method according to any one of claims 5 to 10, wherein the second receiving is performed by using transmission time interval bundling.

12. The method according to any one of claims 5 to 11, wherein the second receiving is performed by hybrid automatic repeat request retransmission opportunities.

13. The method according to any one of claims 1 to 12, wherein the information is a random access message 3.

14. An apparatus, comprising:
means for transmitting, in a first transmission opportunity of n consecutive transmission opportunities, n being an integer greater than 1, information to be transmitted once, and for transmitting, in one transmission opportunity different from the first transmission opportunity, the information a number of times different from once.

15. The method according to claim 14, further comprising means for generating the information to be transmitted.

16. The apparatus according to claims 14 or 15, wherein the means for transmitting is configured to respectively transmit the information once in a second to an (n-1)^{st} transmission opportunity of the n consecutive transmission opportunities, and to transmit the information more than once in an n-th transmission of the n consecutive transmission opportunities.

17. The apparatus according to any one of claims 14 to 16, wherein the means for transmitting is configured to transmit using transmission time interval bundling.

18. The method according to any one of claims 14 to 17, wherein the means for transmitting is configured to transmit by hybrid automatic repeat request retransmission opportunities.

19. An apparatus, comprising:
means for receiving, in a first transmission opportunity of n consecutive transmission opportunities, n being an integer greater than 1, information once, and for receiving, in one transmission opportunity different from the first transmission opportunity, the information a number of times different from once.

20. The apparatus according to claim 19, further comprising:
means for creating, prior to the first transmission opportunity, indication information indicating an option for reception of the information the number of times different from once; and
means for signaling the created indication information.

21. The apparatus according to claim 20, wherein the indication information is one of a part of system information and a system information parameter.

22. The apparatus according to claim 21, wherein the system information parameter is a random access channel format.

23. The apparatus according to any one of claims 20 to 22, wherein the means for signaling is configured to signal, after to the first transmission opportunity, the indication information comprised in a retransmission scheduling grant.

24. The apparatus according to any one of claims 18 to 23, wherein the means for receiving is configured to respectively receive the information once in a second to an (n-1)^{st} transmission opportunity of the n consecutive transmission opportunities, and to receive the information more than once in an n-th transmission opportunity of the n consecutive transmission opportunities.

25. The apparatus according to any one of claims 19 to 24, wherein the means for receiving is configured to receive using transmission time interval bundling.

26. The apparatus according to any one of claims 19 to 25, wherein the means for receiving is configured to receive by hybrid automatic repeat request retransmission opportunities.

27. The method according to any one of claims 14 to 26, wherein the information is a random access message 3.

28. The apparatus according to any one of claims 14 to 18 and 27, wherein the apparatus is constituted by one of a user equipment and a terminal.

29. The apparatus according to any one of claims 19 to 27, wherein the apparatus is constituted by an evolved node B.

30. The apparatus according to any one of claims 14 to 27, wherein at least one, or more of means for generating, means for transmitting, means for receiving, means for creating, means for signaling and the apparatus is implemented as a chipset or module.

31. A system, comprising:
an apparatus according to claim 14; and
an apparatus according to claim 19.

32. A computer program product comprising code means for performing methods steps of a method according to any one of the claims 1 to 13, when run on a computer.
